(19) Europäisches Patentamt / European Patent Office / Office européen des brevets

(11) **EP 2 982 886 A1**

(12) **EUROPEAN PATENT APPLICATION**

(43) Date of publication:
10.02.2016 Bulletin 2016/06

(51) Int Cl.:
*F16J 1/09* (2006.01)    *F02F 3/00* (2006.01)
*F16J 9/08* (2006.01)

(21) Application number: 15179639.8

(22) Date of filing: 04.08.2015

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA

(30) Priority: 05.08.2014 US 201414452509

(71) Applicant: General Electric Company
Schenectady, NY 12345 (US)

(72) Inventor: DONAHUE, Richard John
Waukesha, WI Wisconsin 53188 (US)

(74) Representative: Williams, Andrew Richard
GE International Inc.
GPO-Europe
The Ark
201 Talgarth Road
Hammersmith
London W6 8BJ (GB)

(54) **PISTON ASSEMBLY FOR A RECIPROCATING ENGINE**

(57) A power cylinder system for a reciprocating engine (10) includes a piston (20) configured to move within a cylinder (26). A top-most groove (42) extends circumferentially about the piston and is configured to support a first ring (44), and a space is defined between a portion of the top-most groove and an inner circumferential face of the first ring while the first ring is disposed within the top-most groove. A bottom-most groove (46) extends circumferentially about the piston (20) and is axially spaced apart from the top-most groove (42). A second ring (48) positioned in the bottom-most groove is configured to exert a pressure of less than approximately 1 MPa against an inner annular wall of the cylinder while the piston is positioned within the cylinder. One or more channels formed in the top land are configured to transfer combustion gases to the space while the first ring is disposed within the top-most groove.

FIG. 4

EP 2 982 886 A1

## Description

BACKGROUND

The subject matter disclosed herein relates generally to reciprocating engines, and, more particularly to a piston assembly for a reciprocating engine.

A reciprocating engine (e.g., a reciprocating internal combustion engine) combusts fuel with an oxidant (e.g., air) to generate hot combustion gases, which in turn drive a piston (e.g., a reciprocating piston) within a cylinder. In particular, the hot combustion gases expand and exert a pressure against the piston that linearly moves the piston from a top portion to a bottom portion of the cylinder during an expansion stroke. The piston converts the pressure exerted by the combustion gases and the piston's linear motion into a rotating motion (e.g., via a connecting rod and a crankshaft coupled to the piston) that drives one or more loads, e.g., an electrical generator. The construction of the piston and associated structures (e.g., a piston assembly) can significantly impact exhaust emissions (e.g., unburned hydrocarbons) and engine efficiency, as well as lubricant (e.g., oil) consumption. Furthermore, the construction of the piston assembly can significantly affect friction between components of the reciprocating engine and the operating life of the reciprocating engine. Therefore, it would be desirable to improve the construction of the piston assembly.

BRIEF DESCRIPTION

Certain examples commensurate in scope with the originally claimed invention are summarized below. These examples are not intended to limit the scope of the claimed invention, but rather are intended only to provide a brief summary of possible forms of the invention. Indeed, the invention may encompass a variety of forms that may be similar to or different from the examples set forth below.

In one example, a power cylinder system for a reciprocating engine includes a piston configured to move within a cylinder. A top-most groove extends circumferentially about the piston beneath a top land of the piston. The top-most groove is configured to support a first ring, and a space is defined between a portion of the top-most groove and an inner circumferential face of the first ring while the first ring is disposed within the top-most groove. A bottom-most groove extends circumferentially about the piston and is axially spaced apart from the top-most groove along an axial axis of the piston. A second ring positioned in the bottom-most groove is configured to exert a pressure of less than approximately 1 MPa against an inner annular wall of the cylinder while the piston is positioned within the cylinder. One or more channels formed in the top land are configured to transfer combustion gases to the space while the first ring is disposed within the top-most groove.

In one example, a power cylinder system for a reciprocating engine includes a cylinder having an inner wall and defining a cavity. A piston is positioned within the cylinder and is configured to move in a reciprocating manner within the cylinder. A top-most groove and a bottom-most groove each extend circumferentially about the piston, the top-most groove being positioned adjacent to a top land. A first ring is disposed in the top-most groove, and one or more channels extend into an axially-facing upper surface of the top-most groove or an upper surface of the first ring. The one or more channels are configured to direct combustion gases to a space between an inner circumferential face of the first ring and a portion of the top-most groove. A second ring is positioned in the bottom-most groove, and the second ring is a low-tension ring configured to exert a pressure of less than approximately 1MPa against the inner wall of the cylinder as the piston moves within the cylinder.

In one example, a power cylinder system for a reciprocating engine includes a piston disposed within a cylinder and configured to move in a reciprocating manner within the cylinder. The system includes a top ring disposed within a top-most groove of the piston, and one or more channels open to the top groove are configured to transfer combustion gases to an inner circumferential face of the top ring to drive the top ring radially outward toward the inner wall of the cylinder as the piston moves within the cylinder. The piston assembly also includes an oil ring disposed within a bottom-most groove of the piston, and the oil ring is configured to exert a pressure of less than approximately 1 MPa against the inner wall of the cylinder as the piston moves within the cylinder.

BRIEF DESCRIPTION OF THE DRAWINGS

These and other features, aspects, and advantages of the present invention will become better understood when the following detailed description is read with reference to the accompanying drawings in which like characters represent like parts throughout the drawings, wherein:

FIG. 1 is a schematic block diagram of an embodiment of a portion of a reciprocating engine system;

FIG. 2 is a cross-sectional view of an embodiment of a piston positioned within a cylinder;

FIG. 3 is a side view of a portion of an embodiment of a piston having a radial channel formed in a top land of the piston and having a low-tension oil ring;

FIG. 4 is a cross-sectional side view of a portion of an embodiment of a piston having three piston rings and a radial channel formed in a top land of the piston;

FIG. 5 is a cross-sectional side view of a portion of an embodiment of a piston having two piston rings and a radial channel formed in a top land of the piston; and

FIG. 6 is a cross-sectional side view of a portion of an embodiment of a piston having three piston rings and a radial channel formed in a top piston ring and an axial channel formed in a top land of the piston.

DETAILED DESCRIPTION

One or more specific embodiments of the present invention will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present invention, the articles "a," "an," "the," and "said" are intended to mean that there are one or more of the elements. The terms "comprising," "including," and "having" are intended to be inclusive and mean that there may be additional elements other than the listed elements.

Power cylinder systems for reciprocating engines (e.g., reciprocating internal combustion engines) in accordance with the present disclosure may include one or more pistons each configured to move linearly within a cylinder (e.g., a liner) to convert pressure exerted by combustion gases and the piston's linear motion into a rotating motion to power one or more loads. Each piston may have a top annular groove (e.g., a top ring groove or a compression ring groove) extending circumferentially about the piston and beneath a top land of the piston, and a top ring (e.g., a top piston ring or a compression ring) may be disposed within the top groove. The top ring may be generally configured to block fuel and air, or a fuel-air mixture, from escaping from a combustion chamber and/or to facilitate maintenance of suitable pressure to enable expanding hot combustion gases to cause the reciprocating motion of the piston. Each piston may also have a bottom annular groove (e.g., a bottom ring groove or an oil ring groove) extending circumferentially about the piston distal from the top land of the piston, and a bottom ring (e.g., a bottom piston ring or an oil ring) may be disposed within the bottom groove. The oil ring may be generally configured to scrape a lubricant (e.g., oil) that lines an inner wall of the cylinder. In some embodiments, one or more additional annular grooves (e.g., one or more additional ring grooves or additional compression ring grooves) may extend circumferentially about the piston, and one or more additional rings (e.g., additional compression rings) may be disposed within the one or more additional ring grooves. Together, the top ring, the oil ring, and/or the additional ring may form a ring pack and may generally control flow of combustion gases and/or lubricant (e.g., oil) within the engine.

During operation of the reciprocating engine, fuel and air combust in a combustion chamber, causing the piston to move within the cylinder. The combustion gases also exert a pressure against an outer circumferential face of the top ring, driving the top ring radially inward away from the inner wall of the cylinder. The disclosed embodiments may include one or more channels configured to transfer the combustion gases to a space adjacent to an inner circumferential face of the top ring, such that the combustion gases exert a radially outward directed force on the inner circumferential face of the top ring. Advantageously, the one or more channels may also facilitate oil control within the cylinder. For example, the one or more channels may enable the top ring to maintain contact with the inner wall of the cylinder, and therefore, may enable the top ring to scrape oil along the inner wall of the cylinder. By way of another example, without the one or more channels, oil may accumulate in the top groove and may block the flow of the combustion gases to the space. In the disclosed embodiments, the one or more channels may enable oil to escape from the top groove (e.g., into the combustion chamber or along the inner wall of the cylinder). Thus, the one or more channels may facilitate flow of oil within and out of the top groove and/or reduce residence time of oil within the top groove, which may generally improve oil flow and control. In such cases, the oil ring may be a low-tension oil ring that is configured to exert a pressure of less than approximately 1 Megapascal (MPa) against the inner wall of the cylinder, for example. The piston having the features disclosed herein may effectively and efficiently control oil, while blocking radial ring collapse, as well as reducing blowby of unburned hydrocarbons, oil consumption, emissions, and/or friction between components, which may result in less wear and scuffing, for example.

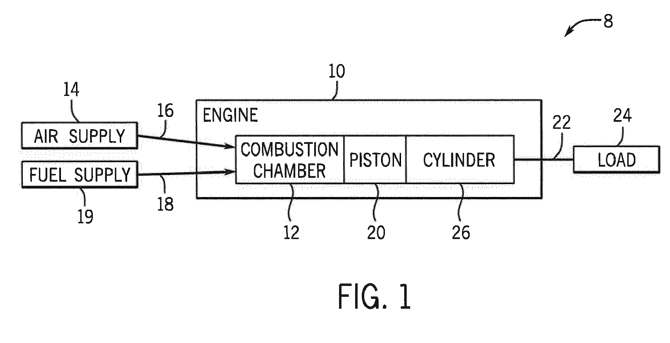

Turning to the drawings, FIG. 1 illustrates a block diagram of an embodiment of a portion of an engine driven power generation system 8. As described in detail below, the system 8 includes an engine 10 (e.g., a reciprocating internal combustion engine) having one or more combustion chambers 12 (e.g., 1, 2, 3, 4, 5, 6, 7, 8, 10, 12, 14, 16, 18, 20, or more combustion chambers 12). An air supply 14 is configured to provide a pressurized oxidant 16, such as air, oxygen, oxygen-enriched air, oxygen-reduced air, or any combination thereof, to each combustion chamber 14. The combustion chamber 14 is also configured to receive a fuel 18 (e.g., a liquid and/or gaseous fuel) from a fuel supply 19, and a fuel-air mixture ignites and combusts within each combustion chamber 14. The hot pressurized combustion gases cause a piston 20 adjacent to each combustion chamber 14 to move linearly within a cylinder 26 and convert pressure exerted by the gases into a rotating motion, which causes a shaft 22 to rotate. Further, the shaft 22 may be coupled to a load 24, which is powered via rotation of the shaft 22. For example, the load 24 may be any suitable device that may generate power via the rotational output of the system 10, such as an electrical generator. Additionally, although the following discussion refers to air as the oxidant 16, any suitable oxidant may be used with the disclosed embodiments. Similarly, the fuel 18 may be any suitable gaseous fuel, such as natural gas, associated petroleum gas, propane, biogas, sewage gas, landfill gas, coal mine gas, for example.

The system 8 disclosed herein may be adapted for use in stationary applications (e.g., in industrial power generating engines) or in mobile applications (e.g., in cars or aircraft). The engine 10 may be a two-stroke engine, three-stroke engine, four-stroke engine, five-stroke engine, or six-stroke engine. The engine 10 may also include any number of combustion chambers 12, pistons 20, and associated cylinders (e.g., 1-24). For example, in certain embodiments, the system 8 may include a large-scale industrial reciprocating engine having 4, 6, 8, 10, 16, 24 or more pistons 20 reciprocating in cylinders. In some such cases, the cylinders and/or the pistons 20 may have a diameter of between approximately 13.5 - 34 centimeters (cm). In some embodiments, the cylinders and/or the pistons 20 may have a diameter of between approximately 10-40 cm, 15-25 cm, or about 15 cm. In certain embodiments, the piston 20 may be a steel piston or an aluminum piston with a Ni-resist ring insert in a top ring groove of the piston 20. The system 8 may generate power ranging from 10 kW to 10 MW. In some embodiments, the engine 10 may operate at less than approximately 1800 revolutions per minute (RPM). In some embodiments, the engine 10 may operate at less than approximately 2000 RPM, 1900 RPM, 1700 RPM, 1600 RPM, 1500 RPM, 1400 RPM, 1300 RPM, 1200 RPM, 1000 RPM, 900 RPM, or 750 RPM. In some embodiments, the engine 10 may operate between approximately 750-2000 RPM, 900-1800 RPM, or 1000-1600 RPM. In some embodiments, the engine 10 may operate at approximately 1800 RPM, 1500 RPM, 1200 RPM, 1000 RPM, or 900 RPM. Exemplary engines 10 may include General Electric Company's Jenbacher Engines (e.g., Jenbacher Type 2, Type 3, Type 4, Type 6 or J920 FleXtra) or Waukesha Engines (e.g., Waukesha VGF, VHP, APG, 275GL), for example.

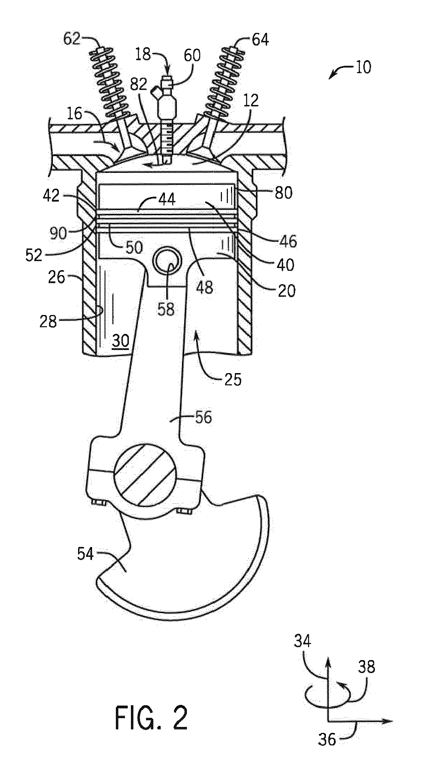

FIG. 2 is a side cross-sectional view of an embodiment of a piston assembly 25 having a piston 20 disposed within a cylinder 26 (e.g., an engine cylinder) of the reciprocating engine 10. The cylinder 26 has an inner annular wall 28 defining a cylindrical cavity 30 (e.g., bore). The piston 20 may be defined by an axial axis or direction 34, a radial axis or direction 36, and a circumferential axis or direction 38. The piston 20 includes a top portion 40 (e.g., a top land) and a top annular groove 42 (e.g., a top groove or a top compression ring groove) extending circumferentially (e.g., in the circumferential direction 38) about the piston 20. A top ring 44 (e.g., a top piston ring or a top compression ring) may be positioned in the top groove 42.

The top ring 44 is configured to protrude radially outward from the top groove 42 to contact the inner annular wall 28 of the cylinder 26. The top ring 44 generally blocks the fuel 18 and the air 16, or a fuel-air mixture 82, from escaping from the combustion chamber 12 and/or facilitates maintenance of suitable pressure to enable the expanding hot combustion gases to cause the reciprocating motion of the piston 20. Furthermore, the top ring 44 of the present embodiments may be configured to facilitate scraping of oil, which coats the inner annular wall 28 and which controls heat and/or friction within the engine 10, for example.

As shown, the piston 20 includes a bottom annular groove 46 (e.g., a bottom ring groove or an oil ring groove) extending circumferentially about the piston 20. A bottom ring 48 (e.g., a bottom piston ring or an oil ring) is disposed within the bottom groove 46. The oil ring 48 may protrude radially outward from the bottom groove 46 to contact the inner wall 28 of the cylinder 26. The oil ring 48 is generally configured to scrape oil that lines an inner wall 28 of the cylinder 26 and to control oil flow within the cylinder 26.

In some embodiments, one or more additional annular grooves 50 (e.g., one or more additional ring grooves or additional compression ring grooves) may extend circumferentially about the piston 20. In some such cases, the additional annular grooves 50 may be positioned between the top groove 42 and the bottom groove 46. In some embodiments, one or more additional rings 52 (e.g., one or more additional rings or additional compression rings) may be disposed within each of the one or more additional ring grooves 50. The additional rings 52 may be configured to block blowby and/or to scrape oil from the inner annular wall 28 of the cylinder 26.

As shown, the piston 20 is attached to a crankshaft 54 via a connecting rod 56 and a pin 58. The crankshaft 54 translates the reciprocating linear motion of the piston 24 into a rotating motion. As the piston 20 moves, the crankshaft 54 rotates to power the load 24 (shown in FIG. 1), as discussed above. As shown, the combustion chamber 14 is positioned adjacent to the top land 40 of the piston 24. A fuel injector 60 provides the fuel 18 to the combustion chamber 14, and a valve 62 controls the delivery of air 16 to the combustion chamber 14. An exhaust valve 64 controls discharge of exhaust from the engine 10. However, it should be understood that any suitable elements and/or techniques for providing fuel 18 and air 16 to the combustion chamber 14 and/or for discharging exhaust may be utilized. In operation, combustion of the fuel 18 with the air 16 in the combustion chamber 14 cause the piston 20 to move in a reciprocating manner (e.g., back and forth) in the axial direction 34 within the cavity 30 of the cylinder 26.

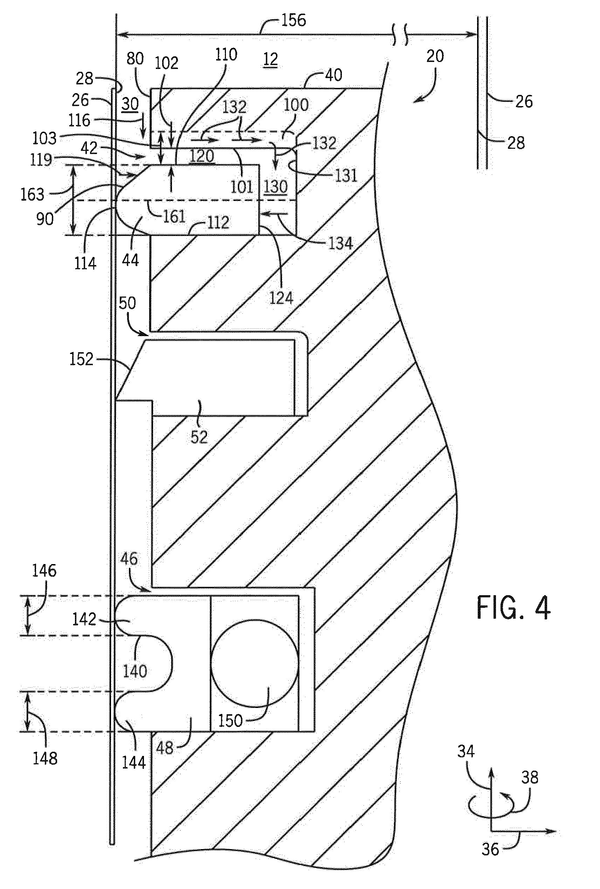

A clearance 78 (e.g., a radial clearance defining an annular space) is provided between the inner annular wall 28 of the cylinder 26 and an outer surface 80 (e.g., an annular surface) of the top land 40 of the piston 20. As discussed above, it is desirable to maintain contact between the top ring 44 and the inner annular wall 28 of the cylinder 26 to prevent blowby as well as to enable the top ring 44 to scrape oil from the inner annular wall 28, for example. However, during operation of the engine 10, the combustion gases from the combustion chamber 12 contact an outer face 90 (e.g., a radially outer face or an outer circumferential face) of the top ring 44 and exert a force that drives the top ring 44 radially inward (e.g., along the radial axis 36) away from the inner wall 28 of the cylinder 26. Accordingly, present embodiments include one or more channels (e.g., passageways, troughs, grooves, or the like), such as one or more radial channels 100, configured to transfer combustion gases to a space (shown in FIG. 4) adjacent to an inner circumferential surface (shown in FIG. 4) of the top ring 44. Such a configuration enables the one or more radial channels 100 to balance the pressure gradient across the top ring 44 (e.g., stabilize the top ring 44) and/or enables the top ring 44 to maintain contact with the inner annular wall 28 of the cylinder 26, as discussed in more detail below.

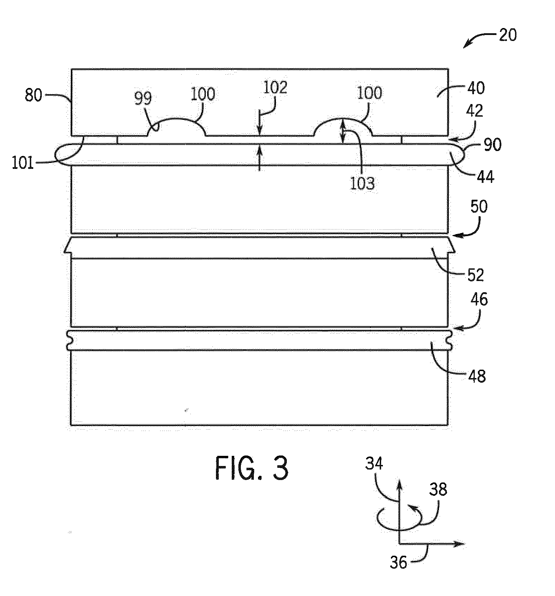

Additionally, the one or more radial channels 100 may advantageously enable use of a low-tension oil ring 48. In typical engines, such low-tension oil rings 48 may not exert enough pressure against the inner annular wall 28 to effectively and reliably scrape oil from the inner annular wall 28 and may not adequately control oil within the cylinder 26. Additionally, without the one or more radial channels 100, oil may block flow of combustion gases through the top groove 42. However, in the presently disclosed embodiments, the one or more radial channels 100 may enable the combustion gases to exert a radially-outward pressure on the top ring 44, thereby enabling the top ring 44 to maintain contact with the inner annular wall 28 and to scrape oil from the inner annular wall 28 of the cylinder 26. Additionally, the one or more radial channels 100 increases an axial distance (shown in FIG. 3) between the top ring 44 and an axially-facing surface (shown in FIG. 3) of the top groove 42, reducing adhesion of the oil to the components of the piston assembly 25 and enabling oil to flow out of (e.g., escape from) the top groove 42 (e.g., into the combustion chamber 12 or along the inner annular wall 28 of the cylinder 26) and/or reducing a residence time of oil within the top groove 42. Thus, together, the one or more radial channels 100, the top ring 44, and the low-tension oil ring 48 may enable adequate control of oil and blowby within the cylinder 26.

By way of example, the low-tension oil ring 48 may be configured to exert a unit pressure of less than approximately 1 MPa against the inner annular wall 28 of the cylinder 26. The unit pressure exerted by the low-tension oil ring 48 is discussed in more detail below with respect to FIG. 4. As also discussed in more detail below, the low-tension oil ring 48 may have any suitable shape or structure and may be biased radially outward by one or more springs coupled to the low-tension oil ring 48. Advantageously, the low-tension oil ring 48 reduces friction within the engine 10 (e.g., between the oil ring 48 and the cylinder 26), resulting in greater efficiency and less wear and tear on the components of the engine 10.

FIG. 3 is a side view of a portion of an embodiment of the piston 20 having radial channels 100 formed in the top land 40 of the piston 20. As shown, the radial channels 100 are formed at discrete locations about the piston 20 (e.g., discrete locations that are spaced apart circumferentially about the piston 20). In the illustrated embodiment, the radial channels 100 have a curved cross-section (e.g., have a curved wall 99) and are formed into or along an axially-facing surface 101 (e.g., an annular surface), which corresponds to both a bottom surface of the top land 40 and an upper surface (e.g., top surface or a top perimeter) of the top groove 42. The radial channels 100 may extend radially inward (e.g., in the radial direction 36) from the outer surface 80 (e.g., an outer annular surface) of the top land 40 of the piston 20. As shown, the radial channels 100 are open toward the top groove 42, and an axial distance 102 between the top ring 44 and the axially-facing surface 101 is increased along the radial channels 100 (e.g., as shown by a first axial distance 102 and a second axial distance 103, greater than the first axial distance 102, coincident with the radial channels 100). Thus, the axial distance between the top ring 44 and the axially-facing surface 101 varies circumferentially about the top ring 44. As discussed in more detail below, such a configuration facilitates transfer of the combustion gases from the cavity 30 along the radial channels 100 to a space (shown in FIG. 4), where the combustion gases exert a radially-outward force (e.g., a pressure-induced biasing force) against an inner face (shown in FIG. 4) of the top ring 44. Thus, the radial channels 100 may facilitate control of the pressure gradient across the top ring 44 and may enable the top ring 44 to maintain contact with the inner annular wall 28 of the cylinder 26.

In the illustrated embodiment, the oil ring 48 is disposed in the bottom groove 46. As discussed above, the oil ring 48 may be a low-tension oil ring 48, which enables the oil ring 48 to scrape oil from the inner annular wall 28 of the cylinder 26 while reducing friction between the oil ring 48 and the inner annular wall 28 of the cylinder 26. As discussed above, the one or more radial channels 100 may enable the top ring 44 and the low-tension oil ring 48 to adequately control oil within the engine 10. Advantageously, the piston assembly 25 having the features disclosed herein may effectively and efficiently control oil and scrape oil from the inner annular wall 28 of the cylinder 26, while blocking radial ring collapse, as well as reducing blowby, oil consumption, emissions, and/or friction between components, which may result in less wear and scuffing, for example.

Additionally, as shown in FIG. 3, the piston 20 may include the additional groove 50 extending circumferentially about the piston 20 and positioned between the top groove 42 and the bottom groove 46. The additional ring 52 may be disposed within the additional groove 50. The additional ring 52 may have any of a variety of configurations and functions. For example, in some embodiments, the additional ring 52 is a compression ring that is configured to contact the inner annular wall 28 of the cylinder 26 to block blowby and/or to scrape oil from the inner annular wall 28 of the cylinder 26. As discussed in more detail below, in some embodiments, the additional groove 50 and the additional ring 52 are not provided, and the top groove 42 and the bottom groove 46 are the only grooves that extend circumferentially about the piston 20 and that are configured to support rings (e.g., the top ring 44 and the oil ring 48). In such cases, together the top ring 44 and the low-tension oil ring 48 may effectively scrape oil from the inner annular wall 28 and/or adequately block blowby without the additional ring 52.

Although the radial channels 100 are shown as having a curved cross-section, it should be understood that the radial channels 100 may have any suitable cross-section or configuration that facilitates transfer of the combustion gases in the manner disclosed herein. Furthermore, although multiple radial channels 100 are illustrated, it should be understood that any number of radial channels 100 may be provided, such as 1, 2, 3, 4, 5, 6, 7, 8, 9, 10, or more. Additionally, the radial channels 100 may be distributed in any suitable manner, including with a uniform circumferential spacing about the piston 20.

With the foregoing in mind, FIG. 4 is a cross-sectional side view of a portion of an embodiment of the piston 20 having three piston rings (e.g., the top ring 44, the oil ring 48, and the additional ring 52) and the radial channels 100 formed in the top land 40 of the piston 20. In the illustrated embodiments, the radial channels 100 are formed in the axially-facing surface 101 of the piston 20. The radial channels 100 extend radially inwardly (e.g., along the radial axis 36) from the outer surface 80 of the top land 40. During operation of the engine 10, combustion gases exert pressure on the outer face 90 of the top ring 44 and generate a radially inward force 108 that drives the top ring 44 away from the inner annular wall 28 of the cylinder 26.

Although a gap 120 (e.g., a top groove clearance) is provided between a top face 110 (e.g., an axially upper face) of the top ring 44 and the axially-facing surface 101 of the piston 20 to enable some combustion gases to flow within the top groove 42, the first axial distance 102 across the gap 120 is desirably configured to minimize ring lift and flutter. Thus, oil may accumulate in the relatively small gap 120 and block the flow of combustion gases through the top groove 42. Thus, the gap 120 may not enable efficient, reliable transfer of the combustion gases to an inner face 124 (e.g., a radially inner face or an inner circumferential face) of the top ring 44, if the gap 120 is blocked with oil. Accordingly, without the disclosed radial channels 100, a large pressure differential may exist across the top ring 44 (e.g., between the outer face 90 and the inner face 124), if the gap 120 is blocked with oil. For example, without the disclosed radial channels 100, the pressure adjacent to the outer face 90 may be greater than the pressure adjacent to the inner face 124. In such cases, the top ring 44 may be susceptible to radial ring collapse, which in turn results in increased oil consumption and blowby, for example.

In the present embodiments, the radial channels 100 may be configured to facilitate transfer of the combustion gases to a space 130 (e.g., an annular space) adjacent to the inner face 124 of the top ring 44 and an inner wall 131 (e.g., an inner annular wall) of the top groove 42, which may provide increased stability of the top ring 44. The combustion gases in the space 130 may exert a radially-outward force 134 to balance or to counter the radially-inward force 108, and the pressure across the top ring 44 may be substantially equal or otherwise controlled to block radial ring collapse and to maintain contact between the top ring 44 and the inner annular wall 28 of the cylinder 26, for example. As shown, the outer circumferential surface 90 of the top ring 44 is configured to contact the inner annular wall 28 to form an annular sealing point 114 (e.g., an annular seal). Such a configuration may advantageously enable the top ring 44 to scrape oil from the inner annular wall 28 of the cylinder 26 during operation of the engine 10. Additionally, oil is generally a viscous and adhesive liquid that may adhere to the piston 20, including the top groove 42, in certain circumstances. The radial channels 100 provide the larger axial distance 103 between the top ring 44 and the axially-facing surface 101, as well as lower surface area to volume ratio. Such a configuration may reduce adhesion and generally facilitate flow of the oil out of the top groove 42 (e.g., to the combustion chamber 12 or along the inner annular wall 28 of the cylinder 26) and therefore, may improve top ring stability to maintain oil control and reduce oil consumption within the engine 10.

As noted above, in certain embodiment, the one or more radial channels 100 may enable use of the low-tension oil ring 48. The low-tension oil ring 48 is configured such that the friction between the low-tension oil ring 48 and the inner annular wall 28 of the cylinder 26 is reduced, while still maintaining adequate oil control. The low-tension oil ring 48 may have any suitable shape or configuration. As shown, the low-tension oil ring 48 includes an outer face 140 (e.g., a radially outer face or an outer circumferential face). In the illustrated embodiment, the oil ring 48 has a U-shaped cross-section having a first annular protrusion 142 (e.g., a first rail) and a second annular protrusion 144 (e.g., a second rail) that are configured to engage and to scrape oil from the inner annular wall 28 of the cylinder 26. The first annular protrusion 142 has a first width 146 (e.g., a width configured to contact the inner annular wall 28 of the cylinder 26) and the second annular protrusion 144 has a second width 148 (e.g., a width configured to contact the inner annular wall 28 of the cylinder 26). The first width 146 and the second width 148 may be generally the same or may be different from one another. A spring 150 (e.g., an annular spring) is coupled to the oil ring 48 and is configured to urge the oil ring 48 radially outward toward the inner annular wall 28 of the cylinder 26.

As shown, the piston assembly 25 includes one additional ring 52. The additional ring 25 is positioned in the additional groove 50 axially between the top groove 42 and the bottom groove 46. The additional ring 52 may have any suitable shape or configuration. As shown, the additional ring 52 includes a tapered outer face 152 (e.g., a radially outer face or an outer circumferential face having a conical and/or curved annular surface). The additional ring 52 may generally be configured to block blowby, to scrape oil from the inner annular wall 28 of the cylinder 26, and/or to control an amount of oil that reaches the top ring 44. As noted above, in some embodiments in accordance with the present disclosure, the additional ring 52 may not be provided. Rather, the top ring 44 and the oil ring 48 may together provide adequate oil control without the additional ring 52.

As noted above, in certain embodiments, the low-tension oil ring 48 may be configured to exert a relatively low unit pressure against the inner annular wall 28 of the cylinder 26. The unit pressure is proportional to a tangential force (e.g., tension) exerted by the oil ring 28, oil ring width (e.g., the sum of the first width 146 and the second width 148), and a bore diameter 156 of the cylinder 26. The tangential force is the circumferential force (e.g., along the circumferential axis 34) of the spring 150 when compressed within the bore diameter 156. In equation 1 shown below, $P_u$ is the unit pressure, $F_t$ is the tangential force, w is the oil ring width 146, 148, and D is the bore diameter 156.

$$P_u = \frac{F_t}{(D)(w)} \qquad (1)$$

In certain embodiments, the low-tension oil ring 48 may be configured to exert a unit pressure of less than approximately 1 MPa against the inner annular wall 28 of the cylinder 26. In some embodiments, the low-tension oil ring 48 may be configured to exert a unit pressure of less than approximately 0.2, 0.3, 0.4, 0.5, 0.6, 0.7, 0.75, 0.8, 0.9, 1.0, 1.1, 1.2, 1.3, 1.4, or 1.5 MPa. In some embodiments, the low-tension oil ring 48 may be configured to exert a unit pressure of between approximately 0.2 to 1, 0.4 to 0.75, or 0.7 to 0.9 MPa. Additionally, in certain embodiments, the first width 146 and/or the second width 148 may each be approximately 0.08 millimeters (mm), 0.09 mm, 0.1 millimeters (mm), 0.2 mm, 0.3 mm, 0.4 mm, 0.5 mm, 0.6 mm, 0.8 mm, 0.9 mm, or 1 mm. In some embodiments, the first width 146 and/or the second width 148 may each be between approximately 0.09 to 0.6 mm, 0.1 to 0.5 mm, or 0.2 to 0.4 mm, for example. Advantageously, the low-tension oil ring 48 reduces friction within the engine 10 (e.g., between the oil ring 48 and the cylinder 26), resulting in greater efficiency and less wear and tear on the components of the engine 10. Together with the radial channels 100, the top ring 44, and/or the additional ring 52, the low-tension oil ring 48 may facilitate adequate oil control within the engine 10.

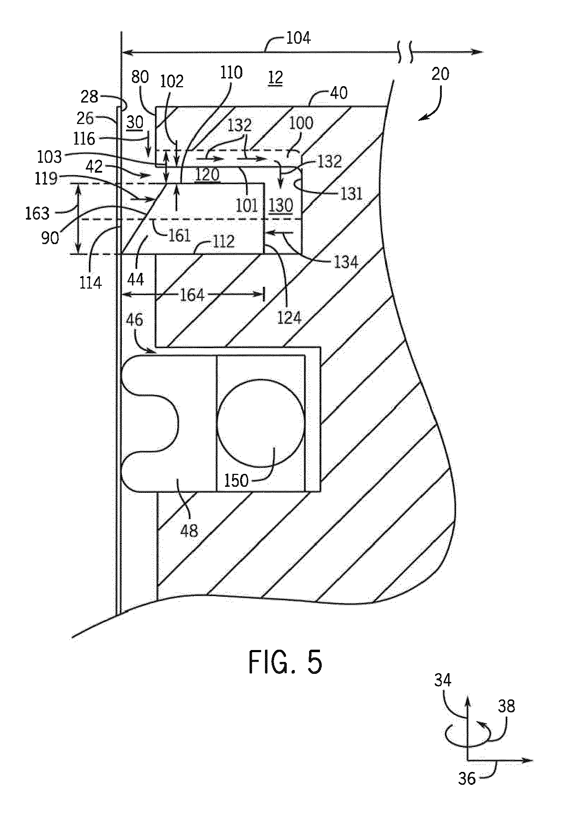

FIG. 5 illustrates a portion of an embodiment of the piston 20 having two piston rings (e.g., the top ring 44 and the oil ring 48) and one or more radial channels 100 formed in the top land 40 of the piston 20. As shown, the additional groove 50 and the additional ring 52 are not provided, and the top groove 42 and the bottom groove 46 are the only grooves that extend circumferentially about the piston 20 and that are configured to support rings (e.g., the top ring 44 and the oil ring 48). In such cases, together the top ring 44 and the low-tension oil ring 48 may effectively scrape oil from the inner annular wall 28 and/or adequately block blowby without the additional ring 52.

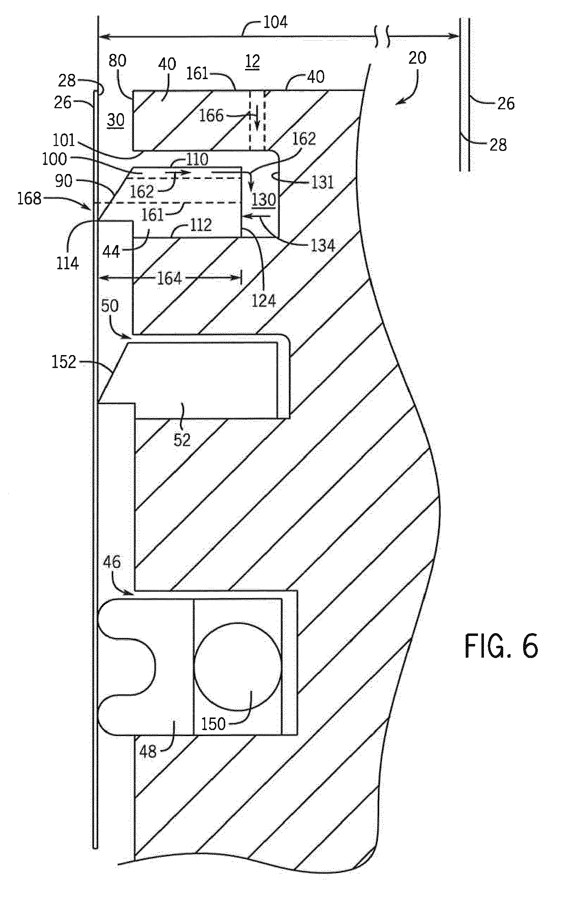

FIG. 6 illustrates a side cross-sectional view of a portion of an embodiment of the piston 20 having a radial channel 100 formed in the top ring 44 and an axial channel 160 formed through the top land 40 of the piston 20. In certain embodiments, radial channels 100 may be formed along the top face 110 of the top ring 44 and/or axial channels 160 may be provided through the top land 40 of the piston 20. Such channels may be provided in addition to or as an alternative to the radial channels 100 formed in the top land 40 of the piston 20, as shown in FIGS. 2-5, for example.

As shown, the radial channels 100 formed in the top ring 44 may extend radially inward (e.g., in the radial direction 36) from the outer face 90 to the inner face 124 of the top ring 44. The radial channels 100 may increase the axial distance 102 between the top face 110 of the top ring 44 and the upper surface 101 of the top groove 42 along the radius 104 coincident with the radial channel 100. Thus, the radial channel 100 may facilitate flow of the combustion gases from the cavity 30 to the space 130 adjacent to the inner face 124, as shown by arrow 162. As discussed above, the transfer of gases to the space 130 may control the pressure differential between the annular outer face 90 and the inner face 124 of the top ring 44, and thus enable the top ring 44 to maintain contact with the inner wall 28 of the cylinder 26.

Furthermore, the axial channel 160 is shown extending in the axial direction 34 from a top surface 161 of the piston 20 through the top land 40 to the space 130. Thus, the axial channel 160 may facilitate flow of the combustion gases from the combustion chamber 12 to the space 130 adjacent to the inner face 124, as shown by arrow 166. As discussed above, the transfer of gases to the space 130 may control the pressure differential between the outer face 90 and the inner face 124 of the top ring 44, and thus enable the top ring 44 having the tapered or partially tapered annular outer face 90 to maintain contact with the inner wall 28 of the cylinder 26.

As set forth above, the radial channels 100 and/or the axial channels 160 may help to equalize pressures or create pressure differential between the inner face 124 of the top ring 44 and the outer face 90 of the top ring 44, thereby helping to bias the top ring 44 radially-outward against the cylinder 26 to block radial ring collapse and/or blowby, for example. For example, the radial channels 100 and/or the axial channels 160 may help equalize the pressures axially above the sealing point 114, while generating a positive pressure differential axially below the sealing point 114 to urge the top ring 44 radially outward against the inner annular wall 28 of the cylinder 26. Additionally, the top ring 44, the radial channels 100, and/or the axial channels 160 may be constructed to block radial ring collapse and blowby, while also providing oil control within the engine 10. Such a configuration may enable use of the low-tension oil ring 48, which advantageously reduces friction between various components of the engine 10.

Although the radial channels 100 and/or the axial channels 160 are illustrated in various positions within the engine 10, it should be understood that the radial channels 100 and/or the axial channels 160 may be positioned in any suitable location to facilitate transfer of combustion gases to the space 130 adjacent to the inner face 124 of the top ring 44. Additionally, any suitable number of radial channels 100 and/or axial channels 160 may be provided. For example, 1, 2, 3, 4, 5, 6, 7, 8, 9, 10 or more radial channels 100 may be provided and/or 1, 2, 3, 4, 5, 6, 7, 8, 9, 10 or more axial channels 160 may be provided. The radial channels 100 in the top ring 44, the radial channels 100 in the upper surface 101 of the top groove 42, and/or the axial channels 160 may be spaced apart at discrete locations about the circumference of the piston 20, and in some cases, may be spaced apart at uniform distances from one another. Furthermore, various low friction coatings may be utilized in addition to the radial channels 100 and/or the axial channels 160 disclosed herein.

Additionally, in some embodiments having the radial channels 100 positioned in the top ring 44 and/or the axial channels 160, the additional groove 50 and the additional ring 52 are not provided. Thus, the top groove 42 and the bottom groove 46 are the only grooves that extend circumferentially about the piston 20 and that are configured to support rings (e.g., the top ring 44 and the oil ring 48), as shown in FIG. 5. In such cases, together the top ring 44 and the low-tension oil ring 48 may effectively scrape oil from the inner annular wall 28 and/or adequately block blowby without the additional ring 52.

Additionally, as shown in FIGS. 4-6, the top ring 44 may have an asymmetrical profile (e.g., an asymmetrical cross-section) about a radial axis 161, such as a barrel-shaped profile, a tapered profile, or partially tapered profile (e.g., a conical profile), in certain embodiments. In such cases, the outer face 90 of the top ring 44 may be configured to effectively and efficiently scrape oil from an inner wall of the cylinder during a down-stroke (e.g., an expansion stroke) of the piston. Although shown differently in each of FIGS. 4-6, it should be understood that the top ring 44 may have any suitable profile, including any of the profiles shown in FIGS. 4-6. For example, as shown in FIG. 4, the top ring 44 has an asymmetrical barrel-shaped (e.g., curved) outer face 90. By way of an additional example, as shown in FIG. 5, the top ring 44 is linearly tapered across a height 163 of the top ring 44. Thus, a radius 164 (and thus a diameter) of the top ring 44 increases between a top face 110 and a bottom face 112 of the top ring 44. The smallest radius 164 of the top ring 44 coincides with the top face 110, while the largest radius 164 of the top ring 44 coincides with the bottom face 112. In such a configuration, the outer surface 90 is configured to contact the inner annular wall 28 to form the sealing point 114 at or proximate to the bottom face 112 of the top ring 44. As shown in FIG. 6, the top ring 44 has a partially-tapered outer face 90, wherein the radius 164 of the top ring increases between the top face 110 and an intermediate region 168 that forms the sealing point 114. Although pressure against the barrel-shaped profile, the linearly tapered profile, or partially tapered profile may urge the top ring 44 radially-inwardly, the radial channels 100 in the axially-facing surface 101 of the top groove 42, the radial channels 100 in the top ring 44, and/or the axial channels 160 may be configured to transfer combustion gases to the space 130 to control the pressure across the top ring 44, to stabilize the top ring 44, and/or to control oil, in the manner set forth above. For example, the radial channels 100 and/or the axial channels 160 may help equalize the pressures axially above the sealing point 114, while generating a positive pressure differential axially below the sealing point 114 to urge the top ring 44 radially outward against the inner annular wall 28 of the cylinder 26.

Beneficial effects of the disclosed embodiments include providing systems for controlling the distribution of combustion gases within the engine 10 via channels, such as radial channels 100 and/or axial channels 160. For example, the combustion gases may exert pressure against the outer face 90 of the top ring 44 of the piston assembly. Radial channels 100 formed in the top land 40 or in the top ring 44 may transfer the combustion gases to the space 130 adjacent to the inner surface 124 of the top ring 44, thus controlling a pressure gradient between the outer face 90 and the inner face 124 and enabling the top ring 44 to maintain contact with the inner wall 28 of the cylinder 26. Such a configuration may also advantageously control oil within the engine 10, enabling the use of the low-tension oil ring 48. The disclosed embodiments may advantageously reduce oil consumption, emissions, blowby, radial ring collapse, and/or friction within the engine 10, for example.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

Various aspects and embodiments of the present invention are defined by the following numbered clauses:

1. A power cylinder system for a reciprocating engine, comprising:

a piston configured to move within a cylinder of the reciprocating engine;
a top-most groove extending circumferentially about the piston beneath a top land of the piston and configured to support a first ring, wherein a space is defined between a portion of the top-most groove and an inner circumferential face of the first ring while the first ring is disposed within the top-most groove;
a bottom-most groove extending circumferentially about the piston and axially spaced apart from the top-most groove along an axial axis of the piston, wherein the bottom-most groove is configured to support a second ring;
a second ring positioned in the bottom-most groove, wherein the second ring is configured to exert a unit pressure of less than approximately 1 MPa against an inner annular wall of the cylinder while the piston is positioned within the cylinder; and
one or more channels formed in the top land, the one or more channels being configured to enable transfer of combustion gases to the space between the portion of the top-most groove and the inner circumferential face of the first ring while the first ring is disposed within the top-most groove.

2. The system of clause 1, comprising the first ring, wherein one or more ring channels extend radially in an upper surface of the first ring at one or more discrete locations, and the one or more ring channels are configured to enable transfer of combustion gases to the space between the portion of the top-most groove and the inner circumferential face of the first ring while the first ring is disposed within the top-most groove.

3. The system of clause 1 or 2, wherein at least some of the one or more channels extend radially in an axially-facing surface of the top land.

4. The system of any preceding clause, wherein at least some of the one or more channels extend axially through the top land of the piston to the space.

5. The system of any preceding clause, wherein the top-most groove and the bottom-most groove are the only ring-supporting grooves extending circumferentially about the piston.

6. The system of any preceding clause, wherein the second ring is configured to exert a unit pressure of less than approximately 0.75 MPa against the inner annular wall of the cylinder while the piston is positioned within the cylinder.

7. The system of any preceding clause, wherein the second ring is biased radially outward against the inner annular wall of the cylinder by one or more springs.

8. A power cylinder system for a reciprocating engine, comprising:

a cylinder having an inner wall surrounding a cavity;
a piston positioned within the cylinder and configured to move in a reciprocating manner within the cylinder;
a top-most groove and a bottom-most groove each extending circumferentially about the piston, wherein the top-most groove is positioned beneath a top land;
a first ring disposed in the top-most groove, wherein one or more channels extend into an axially-facing upper surface of the top-most groove or an upper surface of the first ring and are configured to direct combustion gases to a space between an inner circumferential face of the first ring and a portion of the top-most groove; and
a second ring positioned in the bottom-most groove, wherein the second ring is a low-tension ring configured to exert a pressure of less than approximately 1MPa against the inner wall of the cylinder as the piston moves within the cylinder.

9. The system of any preceding clause, wherein at least some of the one or more channels extend radially in the upper surface of the first ring at one or more discrete locations.

10. The system of any preceding clause, wherein at least some of the one or more channels extend radially in the axially-facing upper surface of the top-most groove.

11. The system of any preceding clause, wherein at least some of the one or more channels extend axially through the top land of the piston to the space.

12. The system of any preceding clause, wherein the second ring is biased radially outward against the inner wall of the cylinder by one or more springs.

13. The system of any preceding clause, comprising an intermediate groove extending circumferentially about the piston between the top-most groove and the bottom-most groove, wherein a third ring is disposed within the intermediate groove.

14. The system of any preceding clause, wherein the second ring is configured to exert a pressure of less than approximately 0.75 MPa against the inner annular wall of the cylinder while the piston is positioned within the cylinder.

15. A power cylinder system for a reciprocating engine, comprising:

a piston disposed within a cylinder and configured to move in a reciprocating manner within the cylinder;
a top ring disposed within a top-most groove of the piston, wherein one or more channels open to the top-most groove are configured to transfer combustion gases to an inner circumferential face of the top ring to drive the top ring radially outward toward the inner wall of the cylinder as the piston moves within the cylinder;
an oil ring disposed within a bottom-most groove of the piston, wherein the oil ring is configured to exert a pressure of less than approximately 1 MPa against the inner wall of the cylinder as the piston moves within the cylinder.

16. The system of any preceding clause, wherein the one or more channels extend into an axially-facing surface of the top-most groove at one or more discrete locations.

17. The system of any preceding clause, wherein at least some of the one or more channels extend radially in the axially-facing surface of the top-most groove.

18. The system of any preceding clause, wherein at least some of the one or more channels extend radially in an upper surface of the top ring.

19. The system of any preceding clause, wherein the oil ring is configured to exert a pressure of less than approximately 0.5 MPa against the inner wall of the cylinder as the piston moves within the cylinder.

20. The system of any preceding clause, wherein the top ring comprises an outer circumferential face having an asymmetrical profile.

**Claims**

1.  A power cylinder system for a reciprocating engine (10), comprising:

a piston (20) configured to move within a cylinder (26) of the reciprocating engine (10);
a top-most groove (42) extending circumferentially about the piston beneath a top land (40) of the piston and configured to support a first ring (44), wherein a space is defined between a portion of the top-most groove (42) and an inner circumferential face of the first ring (44) while the first ring is disposed within the top-most groove;
a bottom-most groove (46) extending circumferentially about the piston (20) and axially spaced apart from the top-most groove (42) along an axial axis (34) of the piston, wherein the bottom-most groove is configured to support a second ring (48);
a second ring (48) positioned in the bottom-most groove (46), wherein the second ring is configured to exert a unit pressure of less than approximately 1 MPa against an inner annular wall of the cylinder while the piston is positioned within the cylinder; and
one or more channels (100) formed in the top land (40), the one or more channels being configured to enable transfer of combustion gases to the space between the portion of the top-most groove (42) and the inner circumferential face of the first ring while the first ring (44) is disposed within the top-most groove.

2.  The system of claim 1, comprising the first ring (44), wherein one or more ring channels (100) extend radially in an upper surface of the first ring at one or more discrete locations, and the one or more ring channels are configured to enable transfer of combustion gases to the space between the portion of the top-most groove (42) and the inner circumferential face of the first ring (44) while the first ring is disposed within the top-most groove (42).

3.  The system of either of claim 1 or 2, wherein at least some of the one or more channels (100) extend radially in an axially-facing surface of the top land (40).

4.  The system of any preceding claim, wherein at least some of the one or more channels (100) extend axially through the top land (40) of the piston (20) to the space.

5. The system of any preceding claim, wherein the top-most groove (42) and the bottom-most groove (46) are the only ring-supporting grooves extending circumferentially about the piston (20).

6. The system of any preceding claim, wherein the second ring (48) is configured to exert a unit pressure of less than approximately 0.75 MPa against the inner annular wall of the cylinder (26) while the piston (20) is positioned within the cylinder.

7. The system of any preceding claim, wherein the second ring (48) is biased radially outward against the inner annular wall of the cylinder (26) by one or more springs.

8. A power cylinder system for a reciprocating engine (10), comprising:

   a cylinder (26) having an inner wall surrounding a cavity;
   a piston (20) positioned within the cylinder and configured to move in a reciprocating manner within the cylinder;
   a top-most groove (42) and a bottom-most groove (46) each extending circumferentially about the piston, wherein the top-most groove is positioned beneath a top land (40);
   a first ring (44) disposed in the top-most groove (42), wherein one or more channels (100) extend into an axially-facing upper surface of the top-most groove or an upper surface of the first ring and are configured to direct combustion gases to a space between an inner circumferential face of the first ring and a portion of the top-most groove; and
   a second ring (48) positioned in the bottom-most groove (46), wherein the second ring is a low-tension ring configured to exert a pressure of less than approximately 1MPa against the inner wall of the cylinder as the piston moves within the cylinder.

9. The system of claim 8, wherein at least some of the one or more channels (100) extend radially in the upper surface of the first ring (44) at one or more discrete locations.

10. The system of either of claim 8 or 9, wherein at least some of the one or more channels (100) extend radially in the axially-facing upper surface of the top-most groove (42).

11. The system of any of claims 8 to 10, wherein at least some of the one or more channels (100) extend axially through the top land (40) of the piston to the space (20).

12. The system of any of claims 8 to 11, wherein the second ring (48) is biased radially outward against the inner wall of the cylinder (26) by one or more springs.

13. The system of any of claims 8 to 12, comprising an intermediate groove extending circumferentially about the piston (20) between the top-most groove (42) and the bottom-most groove (46), wherein a third ring is disposed within the intermediate groove.

14. The system of any of claims 8 to 13, wherein the second ring (48) is configured to exert a pressure of less than approximately 0.75 MPa against the inner annular wall of the cylinder (26) while the piston (20) is positioned within the cylinder.

FIG. 1

FIG. 2

FIG. 3

FIG. 4

FIG. 5

FIG. 6

Europäisches
Patentamt

European
Patent Office

Office européen
des brevets

## EUROPEAN SEARCH REPORT

Application Number

EP 15 17 9639

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP S56 110541 A (HINO MOTORS LTD) 1 September 1981 (1981-09-01) | 1,4,6-8, 11-14 | INV. F16J1/09 |
| Y | * abstract * * * figures 1-4 * | 2,3,5,9, 10 | F02F3/00 F16J9/08 |
| A | US 2008/053396 A1 (HIRAISHI IWAO [JP] ET AL) 6 March 2008 (2008-03-06) * paragraphs [0020], [0021], [0109], [0137] * * claim 1 * * figure 1 * | 1,6,8,14 | |
| Y | NL 39 704 C (BLACHE HANS HENRIK) 15 December 1936 (1936-12-15) * page 1, lines 18-27 * * page 1, line 87 - page 2, line 19 * * figures 1-4 * | 2,3,9,10 | |
| Y | FR 1 304 041 A (ALSACIENNE CONSTR MECA) 21 September 1962 (1962-09-21) * page 1, column 2, lines 7-23 * * figures 1-3 * | 3,10 | TECHNICAL FIELDS SEARCHED (IPC) |
| A | | 4 | F16J F02F |
| Y | JP 2001 336447 A (NISSAN MOTOR) 7 December 2001 (2001-12-07) * abstract * * * figures 3, 7-23 * | 5 | |

The present search report has been drawn up for all claims

| Place of search | Date of completion of the search | Examiner |
|---|---|---|
| The Hague | 9 December 2015 | Van Wel, Oscar |

EPO FORM 1503 03.82 (P04C01)

**ANNEX TO THE EUROPEAN SEARCH REPORT
ON EUROPEAN PATENT APPLICATION NO.**

EP 15 17 9639

This annex lists the patent family members relating to the patent documents cited in  the above-mentioned European search report.
The members are as contained in the European Patent Office EDP file on
The European Patent Office is in no way liable for these particulars which are merely given for the purpose of information.

09-12-2015

| Patent document cited in search report | | Publication date | Patent family member(s) | | Publication date |
|---|---|---|---|---|---|
| JP  S56110541 | A | 01-09-1981 | JP | S6232349 B2 | 14-07-1987 |
|  |  |  | JP | S56110541 A | 01-09-1981 |
| US  2008053396 | A1 | 06-03-2008 | JP | 4954644 B2 | 20-06-2012 |
|  |  |  | JP | 2008057478 A | 13-03-2008 |
|  |  |  | US | 2008053396 A1 | 06-03-2008 |
| NL  39704 | C | 15-12-1936 | NONE | | |
| FR  1304041 | A | 21-09-1962 | NONE | | |
| JP  2001336447 | A | 07-12-2001 | NONE | | |

EPO FORM P0459

For more details about this annex : see Official Journal of the European Patent Office, No. 12/82